# Europäisches Patentamt

**19** **European Patent Office**

**Office européen des brevets**

**11** Numéro de publication: **0 175 163**
**B1**

**12** **FASCICULE DE BREVET EUROPEEN**

**45** Date de publication du fascicule du brevet: **16.01.91**

**51** Int. Cl.⁵: **B 23 Q 15/22**

**21** Numéro de dépôt: **85110558.5**

**22** Date de dépôt: **22.08.85**

---

**54** **Procédé et dispositif pour la commande de l'avance d'un outil vers une pièce à travailler dans une machine-outil.**

---

**30** Priorité: **27.08.84 FR 8413326**

**43** Date de publication de la demande:
**26.03.86 Bulletin 86/13**

**45** Mention de la délivrance du brevet:
**16.01.91 Bulletin 91/03**

**84** Etats contractants désignés:
**CH DE FR GB IT LI**

**56** Documents cités:
**EP-A-0 072 687**
**FR-A-1 237 876**
**FR-A-2 306 791**

**73** Titulaire: **MESELTRON S.A.**
**Avenue Beauregard 14/18**
**CH-2035 Corcelles (CH)**

**72** Inventeur: **Sigg, Hans**
**Charmettes 15**
**CH-2006 Neuchâtel (CH)**

**74** Mandataire: **Barbeaux, Bernard et al**
**ICB Ingénieurs Conseils en Brevets SA Passage**
**Max. Meuron 6**
**CH-2001 Neuchâtel (CH)**

---

Courier Press, Leamington Spa, England.

**Description**

La présente invention est relative aux machines-outils dans lesquelles l'outil et la pièce à travailler effectuent un mouvement relatif au cours des phases de travail. Plus particulièrement, l'invention concerne un procédé et un dispositif de commande de l'avance d'un outil vers la pièce à travailler.

En règle générale, l'approche d'un outil de la pièce à travailler dans les machines-outils est réalisée avec une vitesse relativement élevée afin de réduire autant que possible les temps morts de la machine. Cependant, lorsque l'outil vient en contact avec la pièce à travailler, il convient de réduire très rapidement cette vitesse d'avance élevée pour éviter des détériorations tant de l'outil que de la pièce à travailler.

On connaît donc depuis longtemps des dispositifs utilisés notamment dans les meuleuses ou les rectifieuses qui comportent un transducteur acoustique, de préférence de type piézo-électrique, destiné à détecter l'émission acoustique qui est engendrée lorsque la meule touche la pièce à travailler, le signal ainsi obtenu étant utilisé, après amplification, pour réduire, le cas échéant jusqu'à zéro, la vitesse relativement élevée utilisée lors de la phase d'approche. De tels dispositifs sont décrits notamment dans les brevets CH 316 871, CH 585 609 ( = FR 2 306 791), FR 1 371 394 et FR 1 562 799.

Toutefois, ces dispositifs connus présentent un inconvénient qui consiste en ce que le bruit inhérent engendré par l'outil lorsqu'il vient en contact avec la pièce à travailler ne se différencie que très peu en intensité et en fréquence des bruits parasites produits par la machine, par exemple des bruits des paliers, des engrenages, des organes d'entraînement pneumatiques ou hydrauliques etc., si bien que le bon fonctionnement du dispositif ne peut pas toujours être assuré.

La solution préconisée dans le EP-A-0 072 687, apporte une amélioration à ces dispositifs connus en ce qu'on propose d'engendrer délibérément des vibrations sonores en réalisant des frappes sur le bâti de la machine. L'énergie sonore résultant de ces frappes est détectée à un autre endroit de la machine et une analyse du signal électrique est effectuée par comptage en confrontant ce signal à des seuils de deux niveaux différents. Le signal électrique présente des niveaux différents suivant que l'outil est en contact de la pièce à travailler ou non. Plus précisément, lorsque le seuil le plus élevé est franchi, on estime qu'il y a contact entre l'outil et la pièce et que l'impulsion résultant de la frappe doit être prise en compte pour la commande de l'outil.

Or, cette solution ne s'est avérée que partiellement satisfaisante, car le signal utile transmis entre la pièce et l'outil n'est pas le seul à parvenir au détecteur, l'énergie pouvant, de façon plus ou moins aléatoire, emprunter d'autres chemins, tels que par exemple le bâti de la machine.

L'invention a donc pour but de fournir un procédé perfectionné dans lequel seul le signal réellement représentatif de l'approche de l'outil est utilisé pour commander la vitesse d'avance à la fin de la phase d'approche.

L'invention a donc pour objet un procédé de commande de l'avance d'un outil d'une machine-outil au cours de sa phase d'approche de la pièce à travailler, procédé qui consiste à détecter un signal acoustique représentatif de l'avance de l'outil vers la pièce en dessous d'une distance prédéterminée et à réduire, le cas échéant jusqu'à zéro, la vitesse d'avance de l'outil à l'apparition dudit signal acoustique, à soumettre un premier des éléments constitués par la pièce à travailler et l'outil à une excitation acoustique, ledit signal acoustique détecté étant celui qui résulte dans le second desdits éléments de ladite excitation acoustique transmise du premier élément au second élément, caractérisé en ce qu'il consiste à rejeter du signal détecté toute composante parasite ayant la même ou les mêmes fréquences que ladite excitation acoustique et résultant d'une transmission de l'énergie acoustique à travers le bâti de la machine, en ce que ladite excitation acoustique est impulsionnelle et en ce que ladite composante parasite est rejetée du signal détecté par discrimination des temps de propagation de cette composante et de celle résultant d'une transmission directe de l'énergie acoustique du premier au second élément.

L'invention a aussi pour objet un procédé de commande de l'avance d'un outil d'une machine-outil au cours de sa phase d'approche de la pièce à travailler, procédé qui consiste à détecter un signal acoustique représentatif de l'avance de l'outil vers la pièce en dessous d'une distance prédéterminée et à réduire, le cas échéant jusqu'à zéro, la vitesse d'avance de l'outil à l'apparition dudit signal acoustique, à soumettre un premier des éléments constitués par la pièce à travailler et l'outil à une excitation acoustique, ledit signal acoustique détecté étant celui qui résulte dans le second desdits éléments de ladite excitation acoustique transmise du premier élément au second élément, caractérisé en ce qu'il consiste à rejeter du signal détecté toute composante parasite ayant la même ou les mêmes fréquences que ladite excitation acoustique et résultant d'une transmission de l'énergie acoustique à travers le bâti de la machine, en ce que ladite composante parasite est rejetée du signal détecté par discrimination de phase par rapport au déphasage subi par l'énergie acoustique transmise directement du premier élément au second élément.

Ainsi, ce n'est que la composante réellement utile et représentative de l'approche de l'outil qui peut être exploitée pour commander celui-ci, cette composante étant débarassée de toute influence aléatoire pouvant conduire à un interprétation fausse du spectre sonore parvenant au transducteur.

L'invention a également pour objet un dispositif de commande permettant la mise en oeuvre du procédé suivant l'invention.

Celle-ci sera mieux comprise à la lecture de la description qui va suivre, donnée uniquement à titre d'exemple et faite en se référant aux dessins annexés sur lesquels

la figure 1 montre un schéma très simplifié d'une meuleuserectifieuse dans laquelle est mis en oeuvre le procédé suivant l'invention;

la figure 2 est un schéma plus détaillé d'un circuit électro-hydraulique pouvant être utilisé;

la figure 3 est un diagramme en fonction du temps mettant en évidence certains signaux apparaissant dans le circuit de la figure 2.

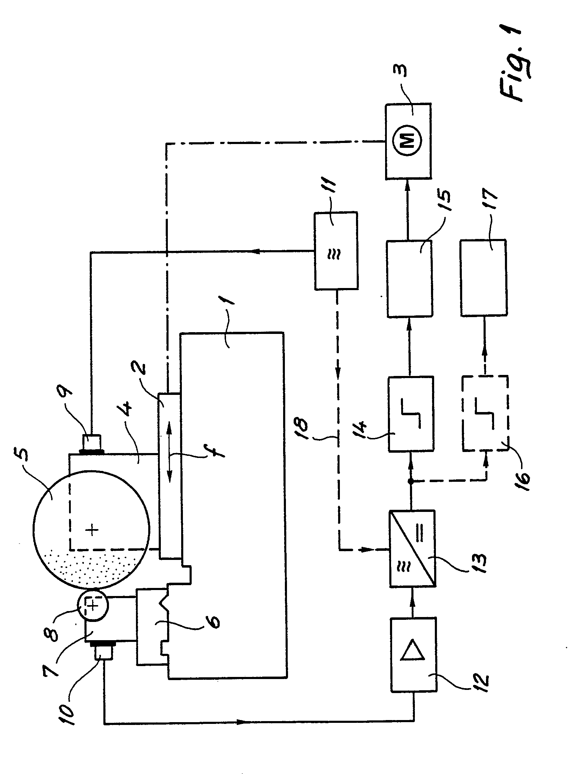

On a représenté sur la figure 1, le bâti 1 d'une meuleuserectifieuse. Ce bâti supporte un premier chariot 2 déplaçable en translation sur le bâti selon la flèche f, à l'aide d'un moteur d'entraînement 3. Le chariot 2 comporte lui-même un support d'outil 4 sur lequel est monté à rotation autour d'un axe horizontal une meule 5.

Le bâti 1 supporte également un second chariot 6 déplaçable en translation selon une direction perpendiculaire à la direction f et ce chariot comporte un support 7 pour une pièce à travailler 8. Les supports 4 et 7 sont pourvus de transducteurs 9 et 10 dont l'un est émetteur et l'autre récepteur. Il s'agit de transducteurs de vibrations capables d'appliquer au support associé ou de détecter dans ce support de l'énergie acoustique constituée par des vibrations. Des transducteurs piézo-électriques fabriqués par exemple par la Société ENDEVCO, 6901 Heidelberg-Eppelheim, Allemagne Fédérale, sous le no 213E peuvent convenir.

Le transducteur 9, qui est ici le transducteur-émetteur, est raccordé à un générateur électronique 11 qui lui fournit l'énergie électrique nécessaire pour son fonctionnement. Le transducteur 10 qui est utilisé en récepteur est connecté à un amplificateur 12 dont la sortie est reliée à un circuit détecteur 13 commandant un premier commutateur électronique 14, ce dernier étant raccordé à un circuit de commande 15 qui assure la commande du moteur 3 et permet notamment d'en réduire la vitesse.

Selon une caractéristique particulière de l'invention, la sortie du circuit détecteur 13 peut être connectée à un second commutateur électronique 16 qui est relié à un circuit d'alarme 17 permettant d'engendrer un signal d'avertissement ou d'arrêter le fonctionnement de la machine lorsque le commutateur électronique 16 est activé. Enfin, le générateur électronique 11 est relié au circuit détecteur 13 par une connexion 18 sur laquelle peut être transmis un signal de référence destiné à ce dernier.

Le fonctionnement du dispositif de commande que l'on vient de décrire est le suivant.

Le générateur électronique 11 alimente le transducteur 9 fixé sur le support 4 de la meule 5. Les oscillations acoustiques émises par le transducteur 9 sont transmises par l'intermédiaire du support 4 à la meule 5 et de là à la pièce à travailler 8 dans la mesure où il y a contact entre la meule et cette pièce ou il y a un autre milieu de transmission présent entre ces deux éléments (tel que par exemple un liquide de refroidissement).

L'énergie ainsi transmise dans la pièce 8 est captée par le transducteur 10 qui engendre un signal électrique appliqué à l'amplificateur 12 qui, après amplification, transmet le signal au circuit détecteur 13.

Le signal fourni par le générateur électronique 11 peut être de diverses natures.

Tout d'abord, ce signal peut être une tension alternative permanente d'une fréquence prédéterminée. Dans ce cas, le circuit détecteur 13 peut être constitué par un simple redresseur et lorsque la tension de sortie continue de ce redresseur dépasse un niveau prédéterminé, le commutateur électronique 14 est commandé pour que, par l'intermédiaire du circuit de commande 15, la vitesse de rotation du moteur 3 soit réduite, voire annulée. Dans ce cas, il est avantageux que le transducteur 10 ainsi que l'amplificateur 12 soient accordés sur la fréquence du générateur 11 par exemple en prévoyant un circuit résonnant dans le transducteur 10 et/ou en employant des filtres passe-bande dans l'amplificateur 12.

Par ailleurs, le signal produit par le générateur électronique 11 peut être modulé de diverses façons, par exemple en amplitude, en fréquence, en phase ou par impulsions ou encore par un mélange de ces modes de modulation. Dans ce cas, le circuit détecteur 13 doit être aménagé en conséquence et pouvoir démoduler le signal suivant le mode de modulation appliqué dans le générateur 11.

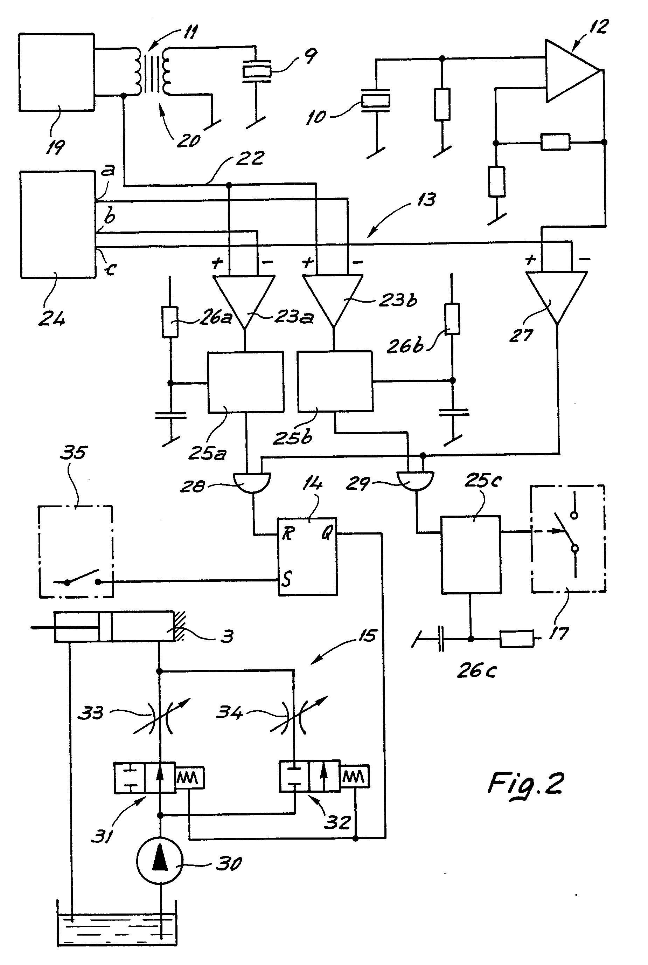

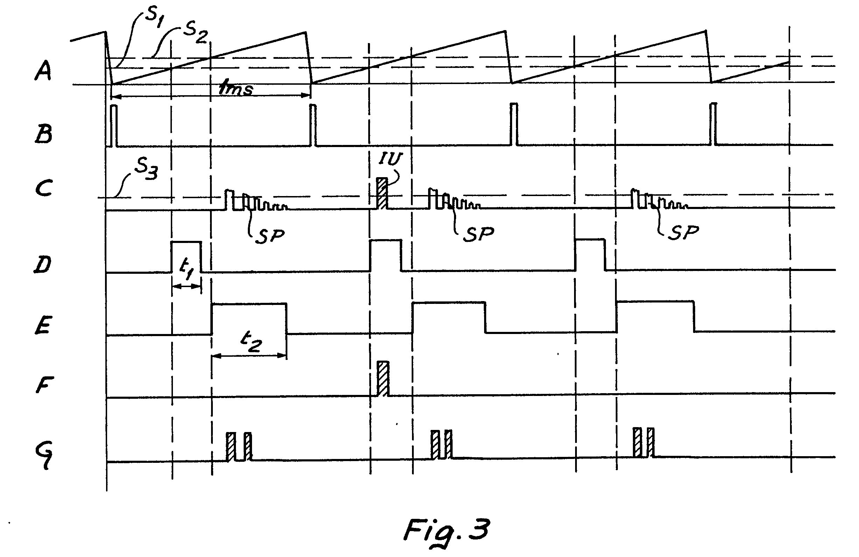

Il est à noter que la transmission de l'énergie acoustique ne se produit pas seulement entre les transducteurs 9 et 10 par l'intermédiaire de l'outil 5 et de la pièce à travailler 8, mais également, de façon parasite par l'intermédiaire des supports 4 et 7 et du bâti 1. Ce trajet de dérivation implique une distance plus longue pour l'énergie acoustique que celle correspondant au trajet direct, de sorte que cette énergie a un temps de propagation plus long et peut ainsi être discriminée par rapport au signal utile. Pour effectuer cette discrimination, il peut être utile de prévoir dans le générateur électronique 11 des moyens permettant d'engendrer un signal impulsionnel et de prévoir dans le circuit détecteur 13 un dispositif de discrimination des temps de propagation des impulsions véhiculées d'une part directement entre les transducteurs 9 et 10 et d'autre part indirectement entre ces transducteurs par l'intermédiaire du bâti 1 de la machine. Un mode de réalisation préféré mettant en oeuvre une telle discrimination est décrit ci-après à propos des figures 2 et 3.

Il est également possible d'aménager le circuit détecteur 13 en tant que discriminateur de phase permettant de déceler les déphasages existant entre le signal direct et le signal parasite.

Il est ainsi possible de rejeter dans le signal de sortie du circuit détecteur 13 toute composante ne correspondant pas à l'énergie sonore transmise directement entre les transducteurs 9 et 10. Cependant, suivant une caractéristique particulière de l'invention, il est possible d'employer le signal correspondant à cette composante parasite pour surveiller le bon fonctionnement du système. En effet, le circuit détecteur 13 peut être équipé d'un discriminateur d'amplitude fournissant un signal de commande au commutateur 16 lorsque cette amplitude dépasse une valeur prédéterminée et plus particulièrement descend en-dessous de cette valeur. Ainsi, il est possible de commander le circuit d'avertissement 17. Cette diminution d'amplitude signifie alors un mauvais fonctionnement de l'un des éléments de la chaîne constituée par le générateur électronique 11, l'ensemble de transmission constitué par la machine-outil, l'amplificateur 12 et le circuit de détection 13. En d'autres termes, le signal d'avertissement pourrait alors inciter à arrêter la machine pour vérification et/ou servir à arrêter automatiquement cette dernière.

Sur les figures 2 et 3, on a donc représenté un mode de réalisation préféré mettant en oeuvre un certain nombre de possibilités de réalisation qui viennent d'être évoquées. A la figure 2, on a utilisé des références identiques pour les éléments qui ont déjà été décrites à propos de la figure 1. Certains de ces éléments ont été représentés plus en détail. Le générateur 11 comporte un oscillateur 19 qui est destiné à engendrer un signal en dents de scie (courbe A de la figure 3).

Cet oscillateur débite dans le primaire d'un transformateur 20 dont le secondaire alimente le transducteur-émetteur 9. Celui-ci reçoit donc périodiquement une impulsion lors du retour à zéro du signal en dents de scie. Le primaire du transformateur 20 est relié à une ligne 22. Celle-ci est reliée au circuit 13 qui comporte tout d'abord deux comparateurs 23a et 23b aux entrées positives desquelles est reliée la ligne 22.

Les entrées négatives des comparateurs sont connectées à une source 24 qui délivre trois tensions de références sur ses bornes a, b, c. Ainsi, le signal qui est présent sur la ligne 22 est confronté aux tensions de référence des sorties a et b de la source 24, ce dont il résulte à la sortie des comparateurs 23a et 23b des signaux de comparaison lorsque le signal en dents de scie franchit respectivement les seuils S1 et S2 établis par les tensions de références (voir également courbe A de la figure 3).

Les sorties des comparateurs 23a et 23b sont reliées respectivement à des circuits monostables 25a et 25b qui, par des circuits respectifs RC 26a et 26b, sont réglés à des constantes de temps différents. Ainsi, il apparaît à la sortie des monostables 25a et 25b deux signaux rectangulaires (courbes D et E de la figure 3) constituant chacun une fenêtre temporelle d'une durée prédéterminée t1 et t2, respectivement.

Le signal émis par le transducteur 9 est représenté par la courbe B de la figure 2. L'impulsion qui est engendrée par ce transducteur donne lieu à la réception d'un signal dans le transducteur-récepteur 10, ayant la forme de la courbe C de la figure 2. Lorsque l'outil 5 (figure 1) et la pièce à travailler 8 sont écartés l'un de l'autre, chaque émission d'une impulsion par le transducteur 9 provoque dans le transducteur 10 la réception d'un signal parasite SP, l'énergie ultra-sonore transitant par le bâti 1 de la machine. Ce signal a une forme relativement reproductible d'une période du signal en dents de scie à l'autre et peut être d'une forme amortie, des réflexions sur diverses parties du bâti pouvant d'ailleurs avoir lieu. Cette situation est représentée, à titre d'exemple, dans les première et troisième périodes du signal en dents de scie de la figure 3, étant entendu naturellement que cette figure ne reflète pas exactement la réalité sur le plan temporel, mais ne sert qu'à l'explication du fonctionnement du dispositif suivant l'invention.

On suppose ainsi, qu'au cours de la deuxième période, il s'établit un contact entre l'outil 5 et la pièce 8, ce qui donne lieu à la réception, dans le transducteur 10, d'une impusion ultra-sonore utile IU pouvant être exploitée pour modifier la vitesse d'avancement de l'outil 5, comme cela a déjà été expliqué auparavant à propos de la figure 1.

Il est évident que les relations temporelles entre, d'une part, l'impulsion émise (courbe B) et, d'autre part, les signaux SP et IU sont bien déterminées et connues pour chaque configuration de machine puisque les temps de propagation de l'énergie ultra-sonore sur les deux trajets possibles sont mesurables.

C'est pourquoi on peut se contenter de créer les deux fenêtres temporelles tl et t2 pour détecter respectivement le signal utile et le signal parasite. Ainsi, au cours de la deuxième période de la figure 3, on saura que l'impulsion utile doit se produire à l'intérieur de la fenêtre temporelle t1 qui a volontairement été choisie avec une certaine marge. De même, on sait d'avance que le signal parasite doit survenir à l'intérieur de la fenêtre temporelle t2 qui, également, a été choisi plus large que strictement nécessaire pour une question de sécurité.

En retournant à la figure 2, on voit que le transducteur 10 est relié à l'amplificateur 12 qui est ici un simple amplificateur opérationnel muni d'un circuit de réaction résistive. Bien entendu, comme déjà indiqué, cet amplificateur peut être complété par un certain nombre de dispositifs de filtrage permettant de déceler des caractéristiques particulières du signal lorsque, à l'émission, on confère au signal émis ces mêmes caractéristiques particulières. Le signal fourni par l'amplificateur 12 est appliqué à l'entrée positive d'un comparateur 27 dont l'entrée négative reçoit la tension de référence de la sortie c de la source 24, cette tension constituant le seuil S3 de la courbe C de la figure 3.

Le comparateur 27 ne laisse donc passer que la partie des signaux SP et IU qui dépasse le seuil S3 et le signal qui en résulte est soumis à une opération ET double dans des portes 28 et 29, ce dont il résulte respectivement les signaux représentés par les courbes F et G de la figure 3.

Le signal issu de la porte ET 28 est relié au circuit 14 qui n'est autre qu'un basculeur RS qui est remis à son état initial par le commutateur 35 et qui fournit à sa sortie le signal pour commander le moteur 3.

Ce dernier est ici supposé être un vérin hydraulique qui est connecté à une pompe 30 par l'intermédiaire de deux vannes 31 et 32 et de deux étranglements 33 et 34. Lorsque le signal de commande à la sortie du basculeur 14 n'est pas présent, c'est la vanne 31 qui laisse passer le fluide hydraulique avec un grand débit vers le vérin 3, par l'intermédiaire de l'étranglement 33 qui est calibré de manière que le vérin se déplace à grande vitesse. Par contre, si ce signal est présent, la vanne 31 est fermée et la vanne 32 est ouverte pour laisser passer le fluide hydraulique à travers l'étranglement 34 qui assure un débit réduit et, par conséquent, une vitesse faible du vérin 3.

La porte ET 29 est reliée au circuit 25c (circuit monostable retriggerable), dont le temps 26c est plus long que la période du générateur 19. Quand les impulsions à l'entrée trigger manquent pour un temps plus long, le circuit 25c commande l'interrupteur 17 pouvant servir pour déclencher une alarme, pour arrêter la machine ou pour tout autre commande appropriée.

## Revendications

1. Procédé de commande de l'avance d'un outil d'une machine-outil au cours de sa phase d'approche de la pièce à travailler, procédé qui consiste à détecter un signal acoustique représentatif de l'avance de l'outil vers la pièce en dessous d'une distance prédéterminée et à réduire, le cas échéant jusqu'à zéro, la vitesse d'avance de l'outil à l'apparition dudit signal acoustique, à soumettre un premier des éléments constitués par la pièce à travailler et l'outil à une excitation acoustique, ledit signal acoustique détecté étant celui qui résulte dans le second desdits éléments de ladite excitation acoustique transmise du premier élément au second élément, caractérisé en ce qu'il consiste à rejeter du signal détecté toute composante parasite ayant la même ou les mêmes fréquences que ladite excitation acoustique et résultant d'une transmission de cette énergie acoustique à travers le bâti de la machine, en ce que ladite excitation acoustique est impulsionnelle et en ce que ladite composante parasite est rejetée du signal détecté par discrimination des temps de propagation de cette composante et de celle résultant d'une transmission directe de l'énergie acoustique du premier au second élément.

2. Procédé de commande de l'avance d'un outil d'une machine-outil au cours de sa phase d'approche de la pièce à travailler, procédé qui consiste à détecter un signal acoustique représentatif de l'avance de l'outil vers la pièce en dessous d'une distance prédéterminée et à réduire, le cas échéant jusqu'à zéro, la vitesse d'avance de l'outil à l'apparition dudit signal acoustique, à soumettre un premier des éléments constitués par la pièce à travailler et l'outil à une excitation acoustique, ledit signal acoustique détecté étant celui qui résulte dans le second desdits éléments de ladite excitation acoustique transmise du premier élément au second élément, caractérisé en ce qu'il consiste à rejeter du signal détecté toute composante parasite ayant la même ou les mêmes fréquences que ladite excitation acoustique et résultant d'une transmission de cette énergie acoustique à travers le bâti de la machine, en ce que ladite composante parasite est rejetée du signal détecté par discrimination de phase par rapport au déphasage subi par l'énergie acoustique transmise directement du premier élément au second élément.

3. Procédé suivant l'une quelconque des revendications 1 et 2, caractérisé en ce qu'il consiste en outre à surveiller l'amplitude de la composante rejetée du signal détecté, et à engendrer un signal d'avertissement lorsque l'amplitude de ce signal dépasse une valeur prédéterminée.

4. Procédé suivant l'une quelconque des revendications 1 à 3, caractérisé en ce que ladite excitation acoustique est modulée en amplitude, en fréquence, en phase ou par modulation d'impulsions et en ce qu'il consiste en outre à soumettre ledit signal détecté à une démodulation correspondant à cette modulation.

5. Dispositif pour la mise en oeuvre du procédé suivant l'une quelconque des revendications 1, 2 ou 3 équipé d'un transducteur acoustique (10) destiné à détecter un signal acoustique représentatif de l'avance de l'outil (5) vers la pièce à travailler (8) en dessous d'une distance prédéterminée, ce dispositif comprenant également un second transducteur (9) pour émettre vers ledit premier transducteur (10) de l'énergie acoustique par l'intermédiaire de l'outil (5) et de la pièce (8), des moyens pour alimenter ledit second transducteur (9) en énergie électrique, des moyens (12, 13) pour traiter le signal détecté par le premier transducteur (10) et des moyens (14, 15, 3) pour commander une réduction de la vitesse d'avance de l'outil (5) lorsque la distance entre celui-ci et la pièce (8) atteint la valeur prédéterminée, ce dispositif étant caractérisé en ce que lesdits moyens de traitement (12, 13) comportent un discriminateur de phase, de temps de propagation d'impulsions et/ou d'amplitude.

6. Dispositif suivant la revendication 5, caractérisé en ce que lesdits moyens de traitement comprennent un redresseur (13).

7. Dispositif suivant la revendication 5, caractérisé en ce que lesdits moyens de traitement (12, 13) comportent un filtre sélectif de fréquence.

8. Dispositif suivant la revendication 5, caractérisé en ce que lesdits moyens de traitement (12, 13) comportent un démodulateur.

9. Dispositif suivant l'une quelconque des revendications 5 à 8, caractérisé en ce que ledit discriminateur (13) est connecté à des moyens générateurs d'un signal d'avertissement (17).

## Patentansprüche

1. Verfahren zum Steuern des Werkzeugvorschubs einer Werkzeugmaschine während der Annäherungsphase an das zu bearbeitende Werkstück, welches Verfahren darin besteht, ein akustisches Signal zu erfassen, das repräsentativ für den Vorschub des Werkzeugs in Richtung Werkstück unterhalb einer vorbestimmten Distanz ist, und die Vorschubgeschwindigkeit zu verringern, gegebenenfalls bis auf Null, bei Auftreten dieses akustischen Signals, ein erstes der Elemente, gebildet von dem Werkstück und dem Werkzeug, einer akustischen Erregung zu unterwerfen, wobei das erfaßte akustische Signal jenes ist, das in dem zweiten Element von der aus dieses übertragenen akustischen Erregung resultiert, dadurch gekennzeichnet, daß es darin besteht, aus dem erfaßten Signal alle parasitären Komponenten mit derselben oder denselben Frequenzen wie die akustische Erregung und herrührend von einer Übertragung dieser akustischen Energie über das Gestell der Maschine auszuscheiden, daß die akustische Erregung impulsartig ist, und daß die parasitäre Komponente aus dem erfaßten Signal ausgeschieden wird durch Diskriminieren der Laufzeiten dieser Komponente und jener, die herrührt von einer direkten Übertragung der akustischen Energie von dem ersten auf das zweite Element.

2. Verfahren zum Steuern des Werkzeugvorschubs einer Werkzeugmaschine während der Annäherungsphase an das zu bearbeitende Werkstück, welches Verfahren darin besteht, ein akustisches Signal zu erfassen, das repräsentativ für den Vorschub des Werkzeugs in Richtung Werkstück unterhalb einer vorbestimmten Distanz ist, und die Vorschubgeschwindigkeit zu verringern, gegebenenfalls bis auf Null, bei Auftreten dieses akustischen Signals, ein erstes der Elemente, gebildet von dem Werkstück und dem Werkzeug, einer akustischen Erregung zu unterwerfen, wobei das erfaßte akustische Signal jenes ist, das in dem zweiten Element von der aus dieses übertragenen akustischen Erregung resultiert, dadurch gekennzeichnet, daß es darin besteht, aus dem erfaßten Signal alle parasitären Komponenten mit derselben oder denselben Frequenzen wie die akustische Erregung und herrührend von einer Übertragung dieser akustischen Energie über das Gestell der Maschine auszuscheiden, daß die parasitäre Komponente aus dem erfaßten Signal ausgeschieden wird durch Diskriminieren der Phase relativ zu der Phasenverschiebung, der die direkt von dem ersten auf das zweite Element übertragene akustische Energie unterliegt.

3. Verfahren nach einem der Ansprüche 1 und 2, dadurch gekennzeichnet, daß es ferner darin besteht, die Amplitude der aus dem erfaßten Signal ausgeschiedenen Komponente zu überwachen und ein Warnsignal zu erzeugen, wenn die Amplitude dieses Signals einen vorbestimmten Wert übersteigt.

4. Verfahren nach einem der Ansprüche 1 bis 3, dadurch gekennzeichnet, daß die akustische Erregung amplitudenmoduliert, frequenzmoduliert, phasenmoduliert oder impulsmoduliert wird und daß es ferner darin besteht, das erfaßte Signal einer Demodulation entsprechend dieser Modulation zu unterwerfen.

5. Vorrichtung für die Durchführung des Verfahrens nach einem der Ansprüche 1, 2 oder 3, ausgestattet mit einem akustischen Wandler (10), bestimmt zum Erfassen eines für den Vorschub des Werkzeugs (5) in Richtung Werkstück (8) unterhalb einer vorbestimmten Distanz repräsentativen akustischen Signals, welche Vorrichtung außerdem einen zweiten Wandler (9) zum Übertragen akustischer Energie über das Werkzeug (5) und das Werkstück (8) zum ersten Wandler (10), Mittel zum Speisen des zweiten Wandlers (9) mit elektrischer Energie, Mittel (12, 13) zum Verarbeiten des von dem ersten Wandler (10) erfaßten Signals und Mittel (14, 15, 3) zum Bewirken einer Verringerung der Vorschubgeschwindigkeit des Werkzeugs (5), wenn die Distanz zwischen ihm und dem Werkstück (8) den vorbestimmten Wert erreicht, umfaßt, welche Vorrichtung dadurch gekennzeichnet ist, daß die Verarbeitungsmittel (12, 13) einen Diskriminator für die Phase, die Laufzeit der Impulse, und/oder der Amplitude umfaßt.

6. Vorrichtung nach Anspruch 5, dadurch gekennzeichnet, daß die Verarbeitungsmittel einen Gleichrichter (13) umfassen.

7. Vorrichtung nach Anspruch 5, dadurch gekennzeichnet, daß die Verarbeitungsmittel (12, 13) ein frequenzselektives Filter umfassen.

8. Vorrichtung nach Anspruch 5, dadurch gekennzeichnet, daß die Verarbeitungsmittel (12, 13) einen Demodulator umfassen.

9. Vorrichtung nach einem der Ansprüche 5 bis 8, dadurch gekennzeichnet, daß der Diskriminator (13) an Warnsignalerzeugungsmittel (17) angeschlossen ist.

**Claims**

1. Method for controlling the advance of a tool in a machine tool, during the approach phase of the workpiece, said method comprising the steps of detecting a signal representative of the advance of the tool towards the workpiece at less than a predetermined distance, and reducing, should the occasion arise until zero, the advance speed of the tool when said acoustic signal is appearing, submitting a first of the elements comprising the workpiece and the tool to an acoustic excitation, said detected acoustic signal resulting in the second of said elements from said acoustic excitation transmitted from the first element to the second element, characterized in that it comprises rejecting from the detected signal any parasitic component having the same frequency or frequencies as the acoustic excitation and resulting from an acoustic energy transmission through the machine frame, in that said acoustic excitation is pulsed and in that said parasitic component is rejected from the detected signal by discriminating the travel times of said component and of the component resulting from a direct transmission of the acoustic energy from the first element to the second element.

2. Method for controlling the advance of a tool in a machine tool, during the approach phase of the workpiece, said method comprising the steps of detecting a signal representative of the advance of the tool towards the workpiece at less than a predetermined distance, and reducing, should the occasion arise until zero, the advance speed of the tool when said acoustic signal is appearing, submitting a first of the elements comprising the workpiece and the tool to an acoustic excitation, said detected acoustic signal resulting in the second of said elements from said acoustic excitation transmitted from the first element to the second element, characterized in that it comprises rejecting from the detected signal any parasitic component having the same frequency or frequencies as the acoustic excitation and resulting from an acoustic energy transmission through the machine frame, in that said acoustic excitation is pulsed and in that said parasitic component is rejected from the detected signal by phase discrimination with respect to phase shift of the acoustic energy transmitted directly from the first element to the second element.

3. Method as set forth in claim 1 or 2, characterized in that it also comprises monitoring the amplitude of the rejected component of the detected signal and generating a warning signal when the amplitude of the signal exceeds a predetermined value.

4. Method as set forth in claim 1, 2 or 3, characterized in that said acoustic excitation is modulated in amplitude, or in frequency or in phase or by a pulse code and in that it further comprises submitting the detected signal to a demodulation corresponding to said modulation.

5. Arrangement for putting into practice the method as set forth in claim 1, 2 or 3 including an acoustic transducer (10) adapted to detect an acoustic signal representative of the tool (5) advance towards the workpiece (8) when at less than a predetermined distance, said arrangement further comprising a second transducer (9), adapted to transmit acoustic energy towards said first transducer (10) via the tool (5) and the workpiece (8), means for providing electrical energy to said second transducer (9), means (12, 13) for processing the signal detected by the first transducer (10) and means (14, 15, 3) for controlling a reduction in speed of the tool advance when the distance between the tool (5) and the workpiece (8) attains said predetermined value, said arrangement being characterized in that said processing means (12, 13) comprises a phase, propagation time and/or amplitude discriminator.

6. Arrangement as set forth in claim 5, characterized in that said signal processing means comprises a rectifier (13).

7. Arrangement as set forth in claim 5, characterized in that said signal processing means (12, 13) includes a frequency selective filter.

8. Arrangement as set forth in claim 5, characterized in that said signal processing means (12, 13) includes a demodulator.

9. Arrangement as set forth in claim 5, 6, 7 or 8, characterized in that said discriminator (13) is coupled to warning signal generating means (17).

Fig. 1

Fig.2

Fig.3

EP 0 175 163 B1